Europäisches Patentamt

European Patent Office

Office européen des brevets

(11) Veröffentlichungsnummer: **0 346 274**
**A1**

## (12) EUROPÄISCHE PATENTANMELDUNG

(21) Anmeldenummer: **89810339.5**

(22) Anmeldetag: **05.05.89**

(51) Int. Cl.⁴: **D 05 B 19/00**
D 05 B 69/22, G 05 B 19/10

(30) Priorität: **06.06.88 CH 2150/88**

(43) Veröffentlichungstag der Anmeldung:
**13.12.89 Patentblatt 89/50**

(84) Benannte Vertragsstaaten: **DE GB IT SE**

(71) Anmelder: **FRITZ GEGAUF AG**
**BERNINA-NÄHMASCHINENFABRIK**
**Seestrasse**
**CH-8266 Steckborn (CH)**

(72) Erfinder: **Gäumann, Alfred**
**Seestrasse 122a**
**CH-8266 Steckborn (CH)**

**Hangarter, Otto**
**Im Bohl 12**
**D-7763 Oehningen 3 Wangen (DE)**

(74) Vertreter: **Steiner, Martin et al**
**c/o AMMANN PATENTANWÄLTE AG BERN**
**Schwarztorstrasse 31**
**CH-3001 Bern (CH)**

(54) **Nähmaschine.**

(57) Der Mikroprozessor der Nähmaschine kann aus einem normalen Betriebszustand zur Steuerung von Nähoperationen in einen Diagnosezustand zur Steuerung von Diagnoseprogrammen umgeschaltet werden. Die Ansteuerung der Diagnoseprogramme erfolgt durch Betätigung ohnehin vorhandener Wählschalter der Nähmaschine, und die Anzeige der Diagnoseergebnisse erfolgt durch ohnehin vorhandene Anzeigeorgane der Nähmaschine. Zur Erleichterung der Diagnose ist eine Maske (10) vorgesehen, welche auf das Betätigungs- und Anzeigefeld der Nähmaschine aufgelegt werden kann und welche Hinweise auf die Ansteuerung bestimmter Programme und das Ablesen der Ergebnisse enthält. Mindestens in einem Fall sind Mittel (32, 33, 36) vorgesehen, um je nach dem Diagnoseergebnis auch Korrekturbefehle einzugeben und abzuspeichern. Es ist somit eine einfache, vielseitige Diagnosemöglichkeit und sogar die Möglichkeit eines Eingriffs in die Elektronik der Nähmaschine gegeben.

FIG.1

EP 0 346 274 A1

**Beschreibung**

## NAEHMASCHINE

Die vorliegende Erfindung betrifft eine Nähmaschine mit prozessorgesteuerten Nähorganen, wobei der Prozessor von Programmen zur Steuerung von Nähvorgängen auf Diagnoseprogramme umschaltbar ist. Nähmaschinen dieser Art sind beispielsweise aus den USA-Patentschriften 4,393,796 und 4,480,561 bekannt. Die Diagnosemöglichkeiten sind jedoch recht beschränkt und sie betreffen praktisch ausschliesslich die Funktionstüchtigkeit bestimmter Maschinenteile.

Der vorliegenden Erfindung liegt die Aufgabe zugrunde, die Diagnose um weitere Programme bzw. Möglichkeiten zu erweitern.

Eine erste Massnahme besteht darin, dass mindestens ein Diagnoseprogramm zugleich zur Eingabe und Abspeicherung von Korrekturbefehlen geeignet ist. Die Eingabe und Abspeicherung von Korrekturbefehlen kann hierbei vorzugsweise während eines Nähvorgangs geschehen, wobei insbesondere Korrekturbefehle zum Nullabgleich für den Vor-bzw. Rückschub des Stoffschiebers eingegeben und abgespeichert werden können. Es ist damit in einfacher Weise möglich, eine Fehleinstellung oder nachträgliche Verstellung nicht nur sicher zu diagnostizieren, sondern ohne Eingriff in die Maschine zu beheben.

Bei einer Nähmaschine, welche mit Sensoren zur Bestimmung der Position je des Schrittmotors zur Steuerung der Stichlänge und der Stichbreite ausgerüstet ist, kann mit Vorteil eine Schaltung zur Anzeige der Position jedes Sensors im Bereiche der durch den zugeordneten Schrittmotor auszuführenden Schritte vorgesehen sein. Mit dieser Anzeige kann überprüft werden, ob die Schrittmotoren richtig positionieren.

Es können im weiteren Mittel vorgesehen sein, um bei Geradstichposition die Einstellungen der Stichlänge, Stichbreite, Stichfeldlage und Heftmatik (Nähen bei jedem 2. oder jedem 6. Stich) zu überprüfen.

Es kann ferner ein Diagnoseprogramm vorgesehen sein, in welchem der Motor zur Steuerung der Stichbreite in seine Null- oder Mittelstellung gebracht wird, um die Mittelposition der Nadel zu überprüfen.

Es kann ferner ein Diagnoseprogramm vorgesehen sein, bei welchem die Steuermotoren, insbesondere Schrittmotoren wechselweise beschleunigt und verzögert werden, wobei die Funktionstüchtigkeit der Motoren geprüft werden kann. Dieses Programm wird insbesondere bei der Dauerlaufprüfung der Maschine (dem sogenannten Burn-in) während der Schlusskontrolle angewendet.

Es ist bekannt, elektronischen Nähmaschinen mit Diagnoseprogramm eine Maske zuzuordnen, welche auf das Bedienungs- und Anzeigefeld der Maschine aufgelegt werden kann und welche Anweisungen zur Durchführung der verschiedenen Diagnosen und zur Ablesung der Ergebnisse enthält. Erfindungsgemäss kann ein durch das Auflegen der Maske betätigbarer Umschalter oder Sensor, z.B. ein kapazitiver Sensor, zur Umschaltung des Prozessors vom Steuerzustand in den Diagnosezustand vorgesehen sein.

Die Erfindung wird nun anhand eines in der Zeichnung dargestellten Ausführungsbeispiels näher erläutert.

Fig. 1 zeigt eine auf das Bedienungs- und Anzeigefeld einer Nähmaschine aufgesetzte Maske mit durch Fenster der Maske sichtbaren Bedienungs- und Anzeigeteilen der Nähmaschine,

Fig. 2 zeigt schematisch einen Sensor zur Abtastung der Anwesenheit der Maske gemäss Fig. 1,

Fig. 3 zeigt einen Schrittmotor zur Steuerung der Stichlänge oder Stichbreite mit einem zugeordneten Positionssensor,

Fig. 4 zeigt ein Blockschema einer Schaltung zur Eingabe und Abspeicherung von Korrekturbefehlen, bzw. einer Korrekturgrösse und

Fig. 5 zeigt ein Flussdiagramm, welches die Eingabe und Abspeicherung von Korrekturbefehlen, bzw. Korrekturgrössen darstellt.

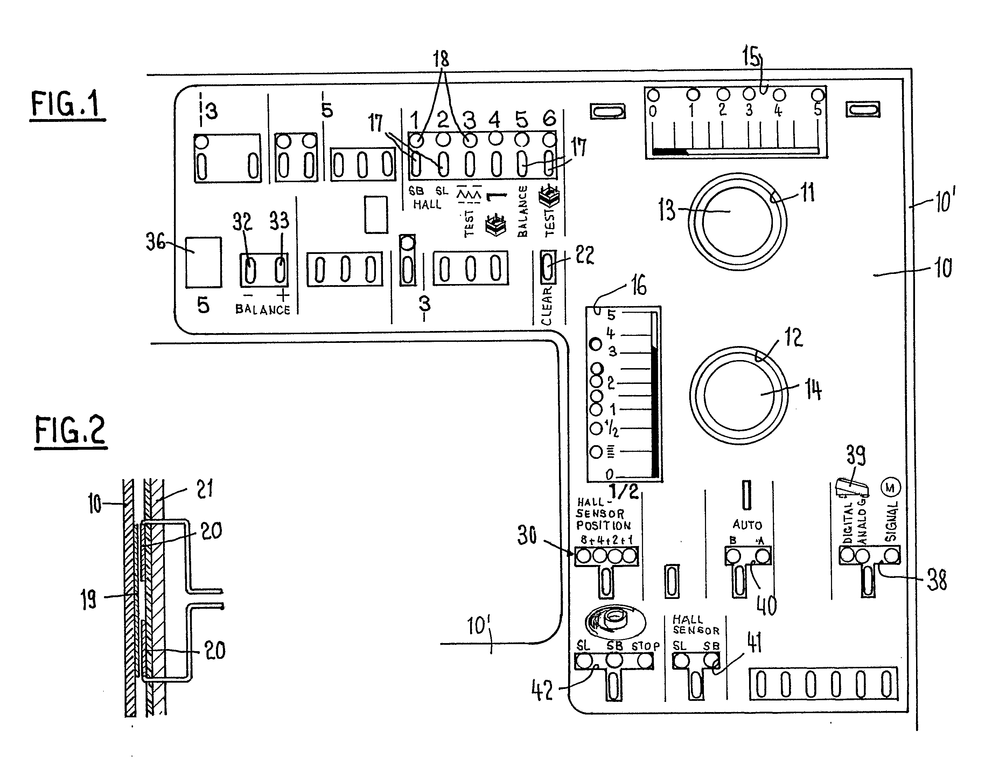

Fig. 1 zeigt eine L-förmige Maske 10 aus Flachmaterial, beispielsweise beschichtetem Karton oder dergleichen. Die Form und Grösse dieser Maske entspricht im wesentlichen derjenigen des Bedienungs- und Anzeigefeldes einer elektronischen Nähmaschine 10' wie sie beispielsweise in der EP-A 88810252.2 dargestellt ist. Die Maske weist verschiedene Fenster auf, die teils nicht näher bezeichnet sind und durch welche bestimmte ausgewählte Bedienungsorgane und Anzeigeorgane der Nähmaschine sichtbar, bzw. zugänglich sind. So sind beispielsweise runde Fenster 11 und 12 vorgesehen, durch welche die Einstellknöpfe 13 bzw. 14 zur Einstellung der Stichbreite bzw. Stichlänge durchgreifen. Den Einstellknöpfen 13 und 14 sind Anzeigeorgane für die Stichbreite bzw. Stichlänge zugeordnet, die durch Fenster 15 bzw. 16 der Maske sichtbar sind.

Zur Wahl der einzelnen Diagnoseprogramme dienen Tastschalter 17, die beim normalen Betrieb der Nähmaschine eine andere Funktion haben und beispielsweise der Wahl von bestimmten Zier- oder Nutzstichen dienen. Diesen Tastschaltern 17 zugeordnete Anzeigelampen oder Leuchtdioden 18 dienen der Anzeige der Wirksamkeit eines bestimmten Diagnoseprogramms. Diese Programme sind mit Nummern 1 bis 6 bezeichnet, und dieselben Nummern sind an anderen Stellen der Maske wiederholt und bezeichnen dort Anzeigen und/oder zusätzliche Betätigungsorgane für das jeweils gewählte Programm. Diese Anzeige und Betätigungsorgane werden im folgenden jeweils im Zusammenhang mit den einzelnen Diagnoseprogrammen beschrieben soweit es erforderlich erscheint.

Es sind Umschaltmittel vorgesehen, welche eine Umschaltung des Mikroprozessors der Nähmaschine vom üblichen Betrieb zur Steuerung der Nähvorgänge auf Diagnosebetrieb gemäss gewählten Programmen gestattet. Hierzu kann an der Nähmaschine ein besonderer Umschalter angeordnet sein. Vorzugsweise wird jedoch eine automatische Umschaltung vorgenommen, sobald die Maske 10 auf das Anzeige- und Bedienungsfeld der Nähmaschine aufgesetzt wird. Gemäss Fig. 2 kann beispielsweise ein kapazitiver Sensor vorgesehen sein, der beim Aufsetzen der Maske anspricht und die Umsteuerung auslöst. Die Maske trägt hierbei an der Innenseite einen leitenden Belag 19, der beim Aufsetzen der Maske leitenden Belägen 20 an einem Gehäuseteil 21 der Nähmaschine gegenüberliegt. Beim Aufsetzen der Maske bzw. dem Entfernen der Maske ändert sich hierbei der Kapazitätswert zwischen den Belägen 20 was durch die Elektronik der Nähmaschine in dem Sinne ausgewertet wird, dass bei erhöhtem Kapazitätswert, also aufgesetzter Maske 10, der Mikroprozessor auf Diagnosebetrieb geschaltet wird, während er beim Entfernen der Maske wieder auf Nähbetrieb zurückgeschaltet wird. Aus Sicherheitsgründen erfolgt allerdings diese Umschaltung jeweils nur nach vorheriger Ausschaltung der Nähmaschine. Zur Durchführung eines oder mehrerer Serviceprogramme ist somit vorerst die Nähmaschine abzuschalten, dann die Maske 10 aufzusetzen und die Nähmaschine wieder einzuschalten. Hierbei erfolgt die automatische Umschaltung. Wird dann noch die mit CLEAR bezeichnete Taste 22 betätigt, befindet sich die Elektronik der Maschine im Grundzustand des Diagnosebetriebs oder Servicebetriebs. Es kann nun ein beliebiges der Diagnoseprogramme 1 bis 6 gewählt werden, indem die zugeordnete Taste 17 gedrückt wird; damit wird das betreffende Programm aktiviert.

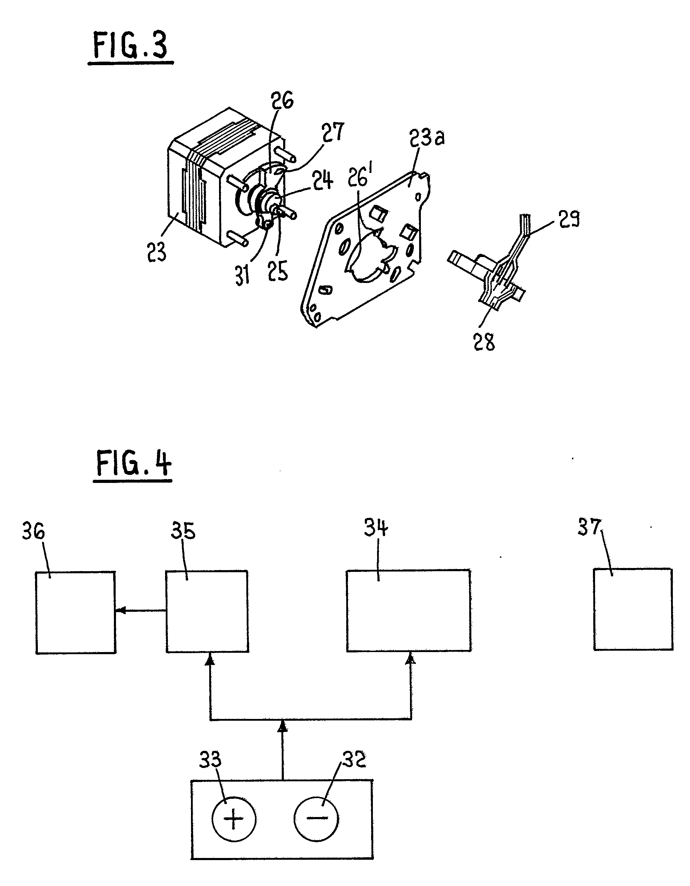

Die Programme 1 und 2 dienen der Prüfung der Position eines Hall-Sensors für die Stichlänge bzw. die Stichbreite. Die beiden Programme stimmen mit geringfügigen Abweichungen überein. Vorerst sei jedoch anhand der schematischen Fig. 3 die Anordnung und der Zweck der erwähnten Hall-Sensoren erläutert. Die in Fig. 3 getrennt dargestellten Teile sind im Betriebszustand fest miteinander verbunden. Der Schrittmotor 23 weist eine Welle 24 mit einem exzentrischen Mitnehmerstift 25 auf. Der Exzenterstift 25 steuert über ein nicht dargestelltes Gestänge den Schwingrahmen der Nadelstange zur Bestimmung der Stichbreite. Auf der Motorwelle 24 sitzt ein Anschlagnocken 26 der mit Anschlägen 26' einer Montageplatte 23a für den Schrittmotor der Begrenzung der Drehbewegung der Motorwelle dient. Am Anschlagnocken 26 ist ein Magnet 27 befestigt, der mit einem vorgelagerten Hall-Sensor 28 zusammenarbeitet. Bei einer bestimmten Position oder Schrittstellung des Schrittmotors liegt der Magnet 27 dem Hall-Sensor 28 gegenüber, der dann über Anschlussleiter 29 ein Signal an den Mikroprozessor überträgt. Der Schrittmotor 23 kann bei gelöster Verschraubung um die Achse der Welle 24 in einem bestimmten Bereich gedreht und dann in der gewünschten Stellung an der Montageplatte 23a festgeschraubt werden. Es kann aber auch erforderlich sein, den aus der korrekten Lage verschobenen Sensor 28 zu richten.

Bei wirksamem Programm 1 wird nun der Schrittmotor 23 zur Steuerung der Stichbreite (SB) schrittweise verstellt und es wird ermittelt, in welcher Schrittstellung der Hall-Sensor 28 aktiviert wird. Diese Position bzw. Schrittnummer wird durch die vierstellige digitale Anzeige 30 (Fig. 1) angezeigt. Ueber den einzelnen Lampen dieser Anzeige sind deren Zahlenwerte 1, 2, 4 und 8 angegeben. Die Kombination leuchtender Lampen gibt somit eine Schrittnummer als Summe der zugeordneten Zahlenwerte an. Im Falle der Stichbreite ist nun beispielsweise zu überprüfen, ob diese Schrittnummer in einem bestimmten Bereich, beispielsweise zwischen 1 und 7 liegt, was im speziellen Fall Gewähr dafür bietet, dass der Schrittmotor richtig positioniert. Zugleich wird natürlich die Betriebstüchtigkeit des Hall-Sensors und des Schrittmotors bestätigt. Ist das Programm Nr. 2 wirksam, erfolgt eine genau gleiche Prüfung des die Stichlänge bestimmenden Schrittmotors. Fällt bei dieser Ueberprüfung das angezeigte Ergebnis ausserhalb den vorgeschriebenen Bereich, ist eine Korrektur erforderlich, die entweder dadurch zu erfolgen hat, dass ein aus der ursprünglichen Lage verschobener Hall-Sensor in die korrekte Lage zurückversetzt wird, oder aber dass die Drehlage des Schrittmotors in der oben erwähnten Weise geändert wird.

Wird das Programm 3 aktiviert, wird die Maschine auf Geradstich eingestellt, was auf der Maske 10 oben links angedeutet ist. In dieser Grundstellung können Einstellungen der Stichlänge, Stichbreite, Stichfeldlage und an der Heftmatik bei welcher die Maschine nur jeden 2. oder jeden 6. Stich näht, vorgenommen werden. Ist Programm Nr. 4 wirksam, werden die Schrittmotoren 23 zur Steuerung der Stichbreite und Stichlänge mit dem Schrittwort der sogenannten Absteckposition bestromt. Diese Absteckposition entspricht einer Nullstellung oder Mittelstellung des Schrittschaltmotors, die einer Mittellage der Nadel bzw. einer Nullstellung der Schrittlänge entspricht. Diese Diagnose dient lediglich der Ueberprüfung des Ist-Zustandes. Wenn die Position nicht stimmt, sind mechanische Eingriffe erforderlich. Bei geringfügigen Fehlern ist eine Korrektur im Gestänge zwischen dem Exzenterstift 25 des Schrittschaltmotors und dem gesteuerten Maschinenteil möglich. Ist die Abweichung bedeutender, kann eine Korrektur der Winkellage des Schrittmotors erforderlich werden. Die Bezeichnung "Absteckposition" rührt übrigens daher, dass schon bei der Fabrikation eine sehr genaue Einstellung der Position des Nokkens 26 auf der Welle 24 des Motors erfolgen muss. Zu diesem Zweck wird bei der Schrittstellung Null des Schrittmotors ein Stift durch eine Bohrung 31 des Nokkens 26 in eine dahinterliegende Bohrung des Motorgehäuses gesteckt. Stimmt die relative Position von Nocken 26 und Motor 23 nicht, d.h. kann der Stift nicht durch beide Bohrungen durchgesteckt werden, muss in der oben erwähnten Weise die Drehlage des Motors korrigiert werden.

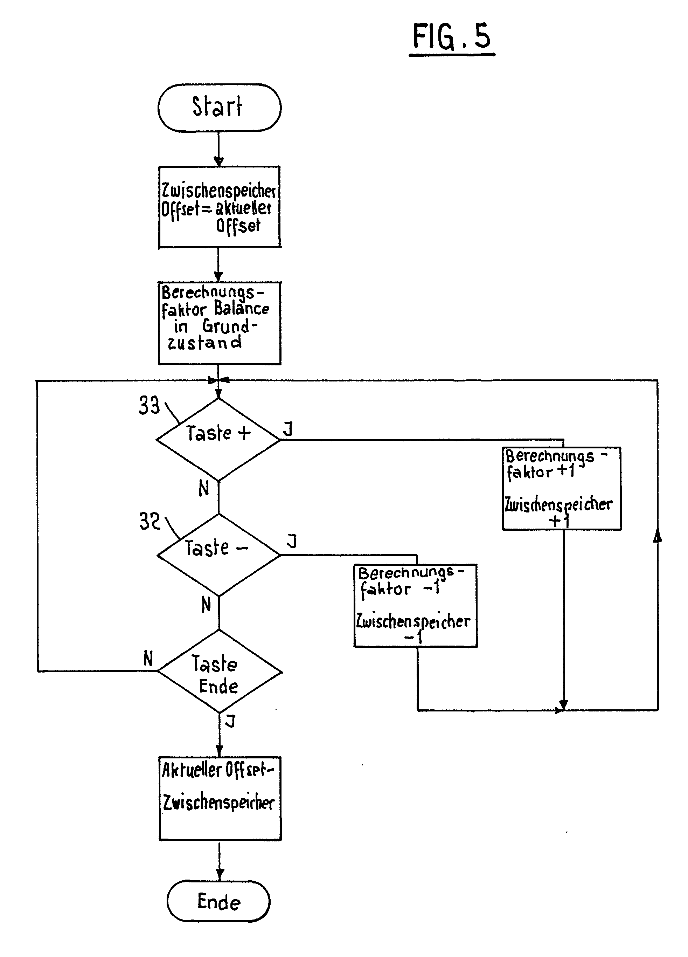

Das Programm Nr. 5 dient der Ueberprüfung und gegebenenfalls Korrektur des Nullabgleichs für Vor- und Rückschub des Stoffschiebers. Bei wirksamem Programm 5 wird die Nähmaschine mit einer bestimmten Drehzahl angetrieben, so dass nun festgestellt werden kann, ob eingeführtes Nähgut stillsteht oder vorwärts oder rückwärts transportiert wird. Da zugleich die Stichlänge auf Null gestellt ist, sollte kein Transport erfolgen. Findet trotzdem ein gewisser Transport statt, kann eine Korrektur durch Betätigung eines der Tastschalter 32 oder 33 erfolgen. Erfolgt ein gewisser Vorschub, wird die mit "Minus" bezeichnete Taste 32 betätigt und zwar so oft bis das Nähgut stillsteht. Wird das Nähgut rückwärts transportiert, wird die mit "Plus" gekennzeichnete Taste 33 betätigt und zwar so oft bis kein Vorschub mehr erfolgt. Diese Korrektur wird anhand der Fig. 4 und 5 näher erläutert. Fig. 4 zeigt wiederum die Tasten 32 und 33, welche mit einem Speicher 34 und einem Zwischenspeicher 35 verbunden sind. Der Inhalt des Zwischenspeichers 35 wird auf einer Anzeige 36 angezeigt. Der Hauptspeicher 34 enthält eine Zahl die einen Faktor für die Stichlängenberechnung darstellt. Ein weiterer Speicher 37 enthält den momentanen Offset für den Nulltransport. Die Summe aus dem im Speicher 34 enthaltenen Faktor und dem im Speicher 37 enthaltenen Offset ergibt den Gesamtfaktor für die Stichlängenberechnung. Als Speicher 37 wird ein nichtflüchtiger Speicher (EEPROM) verwendet.

Fig. 5 stellt den Korrekturvorgang dar. Bei jeder Betätigung der Taste 33 wird der Berechnungsfaktor um eine Einheit erhöht während bei jeder Betätigung der Taste 32 der Berechnungsfaktor um eine Einheit herabgesetzt wird.

Ausser den Diagnoseprogrammen 1 bis 6 können weitere Ueberprüfungen vorgenommen werden. In einem Fenster 38 der Maske sind Leuchten sichtbar, welche durch ihr Aufleuchten anzeigen, dass ein digitales bzw. analoges Steuersignal vom Fusspedal 39 korrekt an den Mikroprozessor übermittelt wird. Im weiteren erfolgt eine Anzeige darüber, ob dem Motor (M) ein entsprechendes Signal zugeführt wird. Mittels einer in einem Fenster 40 der Maske 10 sichtbaren Anzeige kann überprüft werden, ob ein beim automatischen Nähen eines Knopflochs das auf der Maske über der Anzeige 40 angedeutet ist, wirksamer Geber funktionstüchtig sei. In einem Fenster 41 kann angezeigt werden, ob die oben erwähnten Hall-Sensoren funktionstüchtig seien. In einem Fenster 42 sind Leuchten sichtbar, welche durch einen über dem Fenster 42 angedeuteten Code-Positionsgeber für die Hauptwelle der Nähmaschine angesteuert werden. Sie gestatten eine Ueberwachung der korrekten Funktion dieses Positionsgebers, was Voraussetzung dafür ist, dass bestimmte gegenseitige Verriegelungen funktionieren, dass also beispielsweise die Nadel keine Zickzack-Bewegung ausführt, wenn sie sich im Nähgut befindet. Die einzelnen Tastschalter zur Betätigung der verschiedenen Kontrollen und Anzeigen sind nicht im einzelnen bezeichnet und beschrieben. Es sei lediglich erwähnt, dass durch die verschiedenen Tastschalter verschiedenste Ueberprüfungen ausgelöst und entsprechende Anzeigen hervorgerufen werden können.

**Patentansprüche**

1. Nähmaschine mit prozessorgesteuerten Nähorganen, wobei der Prozessor von Programmen zur Steuerung von Nähvorgängen auf Diagnoseprogramme umschaltbar ist, dadurch gekennzeichnet, dass mindestens ein Diagnoseprogramm (5) zugleich zur Eingabe und Abspeicherung von Korrekturbefehlen geeignet ist.

2. Nähmaschine nach Anspruch 1, dadurch gekennzeichnet, dass Mittel (5; 32 - 37) zur Diagnose und Eingabe von Korrekturbefehlen während eines Nähvorgangs vorgesehen sind.

3. Nähmaschine nach Anspruch 2, dadurch gekennzeichnet, dass Korrekturbefehle zum Nullabgleich für den Vor- bzw. Rückschub des Stoffschiebers einführbar und abspeicherbar sind.

4. Nähmaschine nach dem Oberbegriff des Anspruchs 1, mit Sensoren (28), die bei einer bestimmten Position je des Motors (23) zur Steuerung der Stichlänge und der Stichbreite ansprechen, dadurch gekennzeichnet, dass eine Schaltung zur Anzeige der Position jedes Sensors (28) im Bereiche der durch den zugeordneten Motor einzunehmenden Positionen vorgesehen ist.

5. Nähmaschine nach dem Oberbegriff des Anspruchs 1, dadurch gekennzeichnet, dass Mittel vorgesehen sind, um bei Geradstichposition die Einstellungen der Stichlänge, Stichbreite, Stichfeldlage und Heftmatik zu überprüfen.

6. Nähmaschine nach dem Oberbegriff des Anspruchs 1, dadurch gekennzeichnet, dass Mittel vorgesehen sind, um den Motor (23) zur Steuerung der Stichbreite in seine Null- oder Mittelstellung zu bringen, um die Mittelposition der Nadel zu überprüfen.

7. Nähmaschine nach dem Oberbegriff des Anspruchs 1, dadurch gekennzeichnet, dass Mittel zum wechselweisen Beschleunigen und Verzögern der Steuermotoren (23), insbesondere Schrittmotoren, und zur Anzeige deren Funktionstüchtigkeit vorgesehen sind.

8. Nähmaschine nach einem der Ansprüche 1 - 7, mit einer zugeordneten Maske (10) zum Auflegen auf das Bedienungs- und Anzeigefeld derselben, gekennzeichnet durch einen durch das Auflegen der Maske (10) betätigbaren Umschalter oder Sensor, z.B. einen kapazitiven Sensor (19, 20) zur Umschaltung des Prozessors vom Steuerzustand in den Diagnosezustand.

FIG.1

FIG.2

EP 0 346 274 A1

## FIG.3

26
27
23a
24
26'
29
23
31
25
28

## FIG.4

36
35
34
37

33
32

$\oplus$ $\ominus$

# FIG.5

```
                    ┌──────────┐
                    │  Start   │
                    └────┬─────┘
                         │
                         ▼
                 ┌───────────────┐
                 │ Zwischenspeicher
                 │ Offset = aktueller
                 │     Offset    │
                 └───────┬───────┘
                         │
                         ▼
                 ┌───────────────┐
                 │ Berechnungs-  │
                 │ faktor Balance│
                 │  in Grund-    │
                 │   zustand     │
                 └───────┬───────┘
                         │
         ┌───────────────┤
         │               ▼
         │          33 ◇ Taste +  ──J──┐
         │               │             │
         │               N             │
         │               │         ┌────────────────┐
         │               ▼         │ Berechnungs-   │
         │          32 ◇ Taste −  ─J─┐│ faktor +1     │
         │               │         ││ Zwischenspeicher│
         │               N         ││     +1         │
         │               │    ┌────────────────┐
         │          N    ▼    │ Berechnungs-   │
         └────── ◇ Taste Ende │ faktor −1      │
                         │    │ Zwischenspeicher│
                         J    │     −1         │
                         ▼    └────────────────┘
                 ┌───────────────┐
                 │ Aktueller Offset-│
                 │ Zwischenspeicher│
                 └───────┬───────┘
                         │
                         ▼
                    ┌──────────┐
                    │   Ende   │
                    └──────────┘
```

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4 ) |
|---|---|---|---|
| X | US-A-4406235 (EGUCHI/JANOME)<br>* das ganze Dokument *<br>——— | 1 | D05B19/00<br>D05B69/22<br>G05B19/10 |
| X,D | DE-A-3314471 (JANOME)<br>* das ganze Dokument *<br>——— | 1 | |
| A,D | US-A-4393796 (DUNN/SINGER)<br>* Zusammenfassung *<br>——— | 1 | |
| A | CH-A-657879 (MEFINA)<br>* Zusammenfassung *<br>——— | 1 | |
| A | US-A-4648340 (HANYU/JANOME)<br>* Zusammenfassung *<br>——— | 1 | |
| A | US-A-4531466 (HANYU/JANOME)<br>* Zusammenfassung *<br>——— | 1 | |

**RECHERCHIERTE SACHGEBIETE (Int. Cl.4 )**

D05B
G05B

Der vorliegende Recherchenbericht wurde für alle Patentansprüche erstellt

| Recherchenort | Abschlußdatum der Recherche | Prüfer |
|---|---|---|
| DEN HAAG | 03 JULI 1989 | VUILLEMIN L.F. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
........................................................
& : Mitglied der gleichen Patentfamilie, übereinstimmendes Dokument

EPO FORM 1503 03.82 (P0403)